# EUROPÄISCHE PATENTSCHRIFT

(11) **EP 1 316 239 B1**
(45) Veröffentlichungstag und Bekanntmachung des Hinweises auf die Patenterteilung: **08.09.2004**
(21) Anmeldenummer: 00956012.9
(22) Anmeldetag: 07.09.2000
(51) Int. Cl.: H04R 25/00

(54) **VERFAHREN ZUR HERSTELLUNG VON HÖRGERÄTEN UND HÖRGERÄT**
METHOD OF PRODUCING HEARING AIDS AND A HEARING AID
PROCEDE DE PRODUCTION D'APPAREILS AUDITIFS, ET APPAREIL AUDITIF

(43) Veröffentlichungstag der Anmeldung: 04.06.2003
(73) Patentinhaber: PHONAK AG, 8712 Stäfa (CH)
(72) Erfinder: NICCOLAI, Richard, CH-8610 Uster (CH)
(74) Vertreter: Troesch, Jacques J., Dr. sc. nat.
(86) Internationale Anmeldenummer: PCT/CH2000/000480
(87) Internationale Veröffentlichungsnummer: WO 2000/074915

(56) Entgegenhaltungen:
- EP-A- 0 629 101
- WO-A-99/56501
- US-A- 5 321 757

## Beschreibung

Die vorliegende Erfindung betrifft ein Verfahren nach dem Oberbegriff von Anspruch 1 sowie ein Hörgerät nach demjenigen von Anspruch 9.

Zwei- oder Mehrkomponenten-Spritzgiessverfahren sind aus der Kunststoff-Verarbeitungstechnik bekannt. Es kann beispielsweise verwiesen werden auf Ch. Jaroschek "Das Mehrkomponenten-Spritzgiessverfahren" Swiss Plastics 19 (1997) Nr. 12 oder auf U. Stenglin "Hart/Weich-Verbindungen und anwendungsbezogene Modifizierbarkeit von TPE-S (SEBS/SEPS)", Swiss Plastics 20 (1998) Nr. 3. Darin sind die Vorteile von Zwei- oder Mehrkomponenten-Spritzgiessverfahren erläutert, nämlich bezüglich Werkzeugkosten, Personalkosten, Maschinenkosten und Materialkosten. Die erwähnten Verfahren werden grundsätzlich in Sandwich-Spritzgiessverfahren und in Overmoulding-Verfahren kategorisiert. Im vorliegenden Fall interessiert, wenn auch nicht ausschliesslich so doch primär, das erwähnte overmoulding-Verfahren. Dabei wird ein Teil aus einer ersten Materialkomponente gefertigt und mindestens abschnittsweise mit einer zweiten, unterschiedlichen Materialkomponente überspritzt, womit an den ersten Teil der Zweite aus unterschiedlichem Material, aufgebaut wird. Es lassen sich alle spritzfähigen Thermoplast-Werkstoffe, insbesondere auch für das Overmoulding-Verfahren, einsetzen, aber auch ganz gezielt nicht verbindbare weitere Materialien.

Selbstverständlich sind auch bei der Hörgeräte-Produktion die oben erwähnten Kosten wichtige Produktionsfaktoren. Hinzu kommt aber bei der Hörgeräte-Fertigung grundsätzlich das Platzproblem, indem es ein permanentes Bedürfnis der erwähnten Branche ist, möglichst platzsparend zu bauen.

Es ist Aufgabe der vorliegenden Erfindung, ein Fertigungsverfahren vorzuschlagen, und entsprechend ein daraus resultierendes Hörgerät, welches verfahren eine signifikante Erhöhung der Baudichte, an Hörgeräten erlaubt.

Zu diesem Zweck wird nach Anspruch 1 am erwähnten Verfahren vorgeschlagen, mindestens zwei der am Hörgerät zu assemblierenden Teile in Zweioder Mehrkomponenten-Spritzgiesstechnik zu fertigen und gemeinsam zu assemblieren. Selbstverständlich ist der dabei sich gegebenenfalls einstellende Vorteil der Reduktion obgenannter Kosten hoch willkommen, wesentlicher ist aber, dass durch Einsatz des erwähnten Verfahrens das für die Hörgeräte-Bautechnik essentielle Kriterium, die Erhöhung der Komponentendichte pro cm³ zur Verfügung stehenden Platzes erreicht wird.

Wird gemäss einer bevorzugten Ausführungsform des erfindungsgemässen Verfahrens, als einer der Teile, mindestens eine Partie des Hörgeräte-Gehäuses eingesetzt, also beispielsweise die eine Schale eines zweischaligen Gehäuses, so können daran mit dem Zwei- oder Mehrkomponenten-Spritzgiessverfahren weitere Wirkungs-Teile, insbesondere Dichtungen, z.B. zum dichten Vereinigen mit der zweiten Gehäuseschale und/oder schlagdämpfende Aufnehmungen für einzubauende, heikle Gerätekomponente und/oder weitere aktive Hörgeräte-Komponenten, wie akustische Leiter, direkt angebaut werden. Grundsätzlich ergibt sich dadurch die Möglichkeit, Verbindungselemente zwischen den erwähnten Teilen, die bei herkömmlicher Bauweise notwendig sind, wegzulassen bzw. solche Teile nur gerade so voluminös zu bauen als dies funktionsnotwenig ist ohne aber irgendwelche Verbindungspartien, wie Nuten und Stege, vorsehen zu müssen.

Wie erwähnt wird am erfindungsgemässen Verfahren bevorzugter Ausführungsform grundsätzlich mindestens eine vorgesehene Dichtung im Zusammenhang mit der Zwei- oder Mehrkomponentenspritztechnik aufgebaut, gemeinsam mit einem weiteren, an die Dichtung unmittelbar angrenzenden Teil, so beispielsweise und vorzugsweise einem Gehäuseteil oder einem durch das Gehäuse durchragenden Bedienungsorgan oder einem weiteren Hörgeräteteil, das für sich besonderes akkurat zu dichten ist.

In einer weiteren bevorzugten Ausführungsform des Herstellungsverfahrens, insbesondere für Aussenohr-Hörgeräte, wird vorgeschlagen den akustischen Leiter ausgangsseitig des elektrisch-mechanischen Wandlers, welcher akustische Leiter üblicherweise als Kunststoffrohr ausgebildet ist, mit dem erwähnten Spritzgiessverfahren zu fertigen, sei dies gemeinsam direkt mit einer Gehäusepartie, oder sei dies z.B. mit einem elastischen formschlüssig dichtenden in eine Gehäuseaufnahme einzulegenden Montageteil.

In einer weiteren bevorzugten Ausführungsform des erwähnten Verfahrens wird vorgeschlagen einen akustischen Leiter eingangsseitig des akustisch-elektrischen Hörgeräte-Wandlers, in der erwähnten Spritzgiesstechnik zu fertigen, sei dies, beispielsweise wiederum gemeinsam mit einer Partie des Hörgeräte-Gehäuses oder mit einem spezifisch ausgelegten, beispielsweise dichtenden, elastischen Montageteil. In weiteren Ausführungsformen des erfindungsgemässen Verfahrens, die selbstverständlich je einzeln oder in Kombination mit weiteren, bevorzugten Ausführungsformen einsetzbar sind, werden Aufnahmen für Hörgeräte-Komponenten bzw. -Teile im erwähnten Spritzgiessverfahren gefertigt, sei dies, gemeinsam mit Gehäuse-Partien und/oder gemeinsam mit weiteren, unmittelbar an sie angrenzenden Bauteilen.

In einer weiteren, bevorzugten Ausführungsform werden auf der Aussenseite des Gehäuses vorgegebene Flächenbereiche gemeinsam mit dem Gehäuse - aber aus anderem Material - im erwähnten Spritzgiessverfahren gefertigt, z.B. aus Designgründen und/oder um das Ertasten am Gehäuse angeordneter Bedienungsorgane allein mit den Fingern, zu erleichtern.

Ein erfindungsgemässes Hörgerät zeichnet sich nach dem Kennzeichen von Anspruch 9 aus, bevorzugte Ausführungsformen nach den Ansprüchen 10 bis 16.

Die Erfindung wird anschliessend beispielsweise anhand von Figuren erläutert. Es zeigen:
Fig. 1 schematisch eine Partie eines Hörgeräte-Gehäuses in perspektivischer Darstellung mit erfindungsgemäss angebauter Dichtung.
Fig. 2 ein Querschnitt durch einen Teil des Gehäuses nach Fig. 1 mit der erfindungsgemäss aufgebauten Dichtung.
Fig. 3 einen Querschnitt durch die Gehäusewandung eines nach herkömmlichem Vorgehen aufgebauten Hörgerätes mit assemblierter Dichtung.
Fig. 4 schematisch einen Querschnitt durch einen Teil eines Hörgeräte-Gehäuses mit erfindungsgemäss angebautem akustischem Leiter und/oder Aufnahme für ein Modul.
Fig. 5 schematisch einen Querschnitt durch einen Gehäusewandungsabschnitt mit Bedienungseinheit und erfindungsgemäss aufgebauter Durchführung und Einheitshalterung.
Fig. 6 schematisch und prinzipiell das erfindungsgemässe Verbinden zweier Hörgerät-Funktionseinheiten.

Bereits die im Rahmen der Beschreibungseinleitung gegebenen Ausführungen eröffnen dem Fachmann ohne weiteres, je nach zu konzipierendem Hörgerät bzw. dessen Aufbau eine grosse Zahl Möglichkeiten, durch vereintes Verarbeiten im Zwei- oder Mehrkomponenten-Spritzgiessverfahren, insbesondere auch durch Overmoulding, zwei oder mehr der vorzusehenden Bauteile platzsparend vereint zu fertigen, und dann gemeinsam als ein integraler Teil zu assemblieren. Trotzdem sollen nachfolgend anhand einiger schematischer Beispiele, bevorzugte Einsatzweisen des erwähnten Spritzgiessverfahrens erläutert werden. Auf die eigentliche Technik der Zwei- oder Mehrkomponenten-Spritzgiessverfahren wird nicht eingegangen, denn diese ist, wie erwähnt, aus dem generellen Komponentenbau, insbesondere aus der Kunststoffpress- und Spritzgiesstechnik hinlänglichst bekannt.

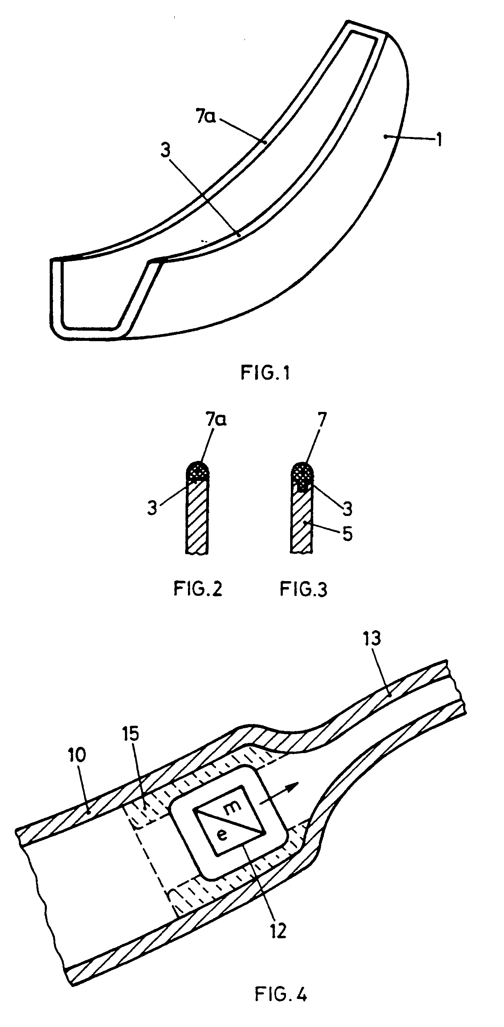

In Fig. 1 ist schematisch und perspektivisch die Schale 1 eines Hörgeräte-Gehäuses, beispielsweise eines Aussenohr-Hörgerätes, dargestellt. Entlang ihrer Stirnflächen 3 soll sie mit weiteren Gehäusepartien so assembliert werden, dass ihr Innenraum entlang dieser Stirnflächen 3 dicht verschlossen wird. Herkömmlicherweise wird dies dadurch gelöst, dass gemäss Figur 3 im Bereich der Stirnflächen 3 Positionierungs- und Halterungsvorkehrungen, wie dargestellt beispielsweise Nuten in die Wandung der Gehäusepartie 1 eingearbeitet werden, in welche nochmals, manuell, eine Dichtung 7 montiert wird.

Erfindungsgemäss wird nun an der erwähnten Gehäuseschale 1 bzw. der Stirnfläche 3 direkt, durch Zweikomponenten-Overmoulding-Spritzgiessverfahren eine Dichtung 7a aufgespritzt. Dabei genügt das Material der eigentlichen Gehäuseteilwandung den an das Gehäuse bezüglich Stabilität etc. zu stellenden Anforderungen, während das Material der im Overmoulding aufgespritzten Zweitkomponente den an die Dichtung 7a zu stellenden Anforderungen genügt. Die Dichtungspartie 7a kann dabei exakt so dimensioniert werden, wie es den Dichtungsanforderungen entspricht, ebenso kann die Wandung der Gehäusepartie 1 ausschliesslich auf Kriterien hin, die an das Gehäuse zu stellen sind, dimensioniert und geformt werden. Eine Ausbildung der Gehäusewand, welche zusätzlich der Assemblierung einer getrennten Dichtung 7, gemäss Fig. 3, genügt, entfällt.

In Fig. 4 ist schematisch dargestellt, wie beispielsweise an einem Hörgeräte-Gehäuse 10 einerseits, erfindungsgemäss ein akustischer Leiter 13 angebaut wird, z.B. ausgangsseitig eines im Hörgerät montierten, elektro-mechanischen Wandlers oder, in Analogie, eingangsseitig eines am Hörgerät vorgesehenen akustisch-elektrischen Wandlers (nicht dargestellt). Zusätzlich kann für die Wandlereinheit 12 im Gehäuse 10 ein elastischer, federnder Aufnahmeblock 15 integriert sein. Gehäuse 10 und akustischer Leiter 13 und/oder Gehäuse 10 und Aufnahmeblock 15 oder alle drei, Gehäuse 10, Aufnahmeblock 15 und akustischer Leiter 13 werden als ein Teil in einem Zwei- oder Dreikomponenten-Spritzgiessverfahren gefertigt. Dabei wird als Material des Gehäuses 10 bzw. dessen Wandung in üblicher Art und weise ein Material gewählt, das den an das Gehäuse zu stellenden Anforderungen genügt, als Material für den akustischen Leiter 13 z.B. ein Material, welches, wie beispielsweise für das Aussenohrgerät, biokompatibel ist, und es wird als Material für den Aufnahmeblock 15 ein Material gewählt, das bezüglich Schlag- und Schockdämpfung und Halterung des Wandlers 12 den diesbezüglich zu stellenden Anforderungen genügt. Es ist dabei auch ohne weiteres möglich, beispielsweise das Material des Blockes 15 elektrisch leitend zu wählen, soll beispielsweise der Wandler 12 elektrisch geschirmt werden.

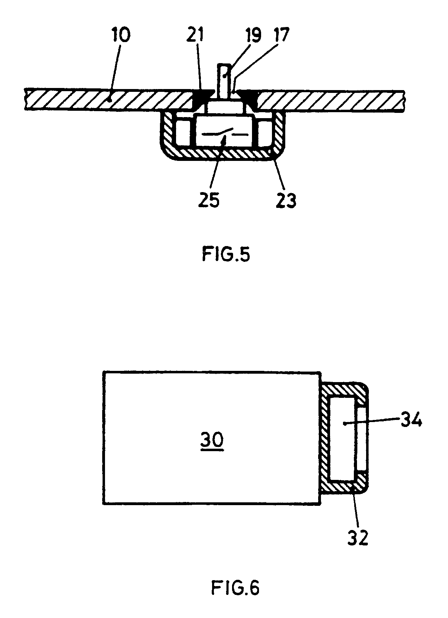

Wiederum schematisch ist in Fig. 5 ein erster Teil, beispielsweise wiederum eine Wandung einer Gehäusepartie 10 dargestellt, mit einer Durchführungsöffnung 17, durch welche ein Bedienungsorgan 19, wie ein Schalter ein Bedienungselement 25 des Hörgerätes, durchragt. Dadurch dass im Umrandungsbereich der Durchführungsöffnung 17 für das Bedienungsorgan 19, im Zwei- oder Mehrkomponenten-Spritzgiessverfahren, gemeinsam mit dem Gehäuseteil 10, elastische gegebenenfalls dichtende Partien 21 angespritzt werden, und gegebenenfalls zusätzlich auch eine Aufnahme 23 für federnde, satte Fixierung der Einheit 25 wird ein optimal platzsparender Einbau der Einheit 25 ermöglicht.

In Fig. 6 ist dargestellt wie am Gehäuse 30 eines Aggregates 34, beispielsweise eines Elektronikmoduls des Hörgerätes eine Aufnahme 32 zur entsprechenden Positionierung und Halterung eines weiteren Aggregates 34 mit dem erwähnten Zwei- oder Mehrkomponenten-Spritzgiessverfahren angebaut wird, womit wiederum eine optimal kleinbauende Assemblierung mit hoher Packungsdichte ermöglicht wird.

Aufgrund des erfindungsgemässen Herstellungsverfahrens werden grosse Einsparungen beim Assemblieren erreicht: Es werden Assemblierungs-Schritte durch die integrale Zwei- oder Mehrteil-Herstellung eingespart. Weiter wird der gerade für Hörgeräte äusserst wichtige Vorteil erwirkt, dass funktionell unterschiedliche Teile, die nach Assemblierung ohnehin aneinander zu liegen kommen, gezielt mit den jeweils notwendigen Materialeigenschaften ausgelegt werden können, aber trotzdem als ein integraler Teil. Dadurch entfallen Bauvolumen konsumierende Massnahmen zur nachhaltigen Assemblierung dieser Teile. Nimmt man hierfür als Beispiel die in den Fig. 1 bis 3 dargestellte Ausführungsform so ist ersichtlich, dass eine Dichtung 7a die nur gerade den Dichtungsanforderungen genügen muss, wesentlich kleiner und dünner gefertigt werden kann, wenn sie am Teil 1 integral angeformt ist, als wenn sie separat als Dichtung 7 gefertigt und darnach, beispielsweise manuell, an die entsprechenden Stirnflächen des Teiles 1 montiert werden muss, sei dies durch Kleben, Stecken oder dgl. Die Präzision mit welcher die Dichtungspartie 7a unmittelbar an die die Stirnfläche 3 bildende Wand des Teiles 1 angebaut werden kann, ist mit gleicher Dimensionierung durch Assemblieren getrennter Teile kaum möglich oder nur mit hohem Aufwand.

## Patentansprüche

1. Verfahren zur Herstellung von Hörgeräten, bei dem mindestens zwei Teile aus unterschiedlichen Materialien erstellt und assembliert werden, **dadurch gekennzeichnet, dass** man die Teile durch Zwei- oder Mehrkomponenten-Spritzgiesstechnik bereits vereint erstellt, wobei die Teile dabei aus unterschiedlichen Materialkomponenten erstellt werden.

2. Verfahren nach Anspruch 1, **dadurch gekennzeichnet, dass** als eines der Teile mindestens eine Partie des Gehäuses durch Zweioder Mehrkomponenten-Spritzgiesstechnik erstellt wird.

3. Verfahren nach einem der Ansprüche 1 oder 2, **dadurch gekennzeichnet, dass** als einer der Teile eine Dichtung in Zwei- oder Mehrkomponenten-Spritzgiesstechnik erstellt wird, vorzugsweise mindestens eine Partie des Gehäuses und eine Dichtung.

4. Verfahren nach einem der Ansprüche 1 bis 3, **dadurch gekennzeichnet, dass** als einer der Teile ein akustischer Leiter, ausgangsseitig eines elektro-mechanischen Wandlers des Hörgerätes, durch Zwei- oder Mehrkomponenten-Spritzgiesstechnik erstellt wird.

5. Verfahren nach einem der Ansprüche 1 bis 4, **dadurch gekennzeichnet, dass** als einer der Teile ein akustischer Leiter eingangsseitig eines akustisch-elektrischen Wandlers, in Zwei- oder Mehrkomponenten-Spritzgiesstechnik erstellt wird.

6. Verfahren nach einem der Ansprüche 1 bis 5, **dadurch gekennzeichnet, dass** eine Aufnahme für Teile des Hörgerätes im Gehäuse, vorzugsweise gemeinsam mit mindestens einer Partie des Gehäuses, in Zwei- oder Mehrkomponenten-Spritzgiesstechnik erstellt wird.

7. Verfahren nach einem der Ansprüche 1 bis 6, **dadurch gekennzeichnet, dass** eine Berandungspartie einer Durchführungsöffnung im Gehäuse, vorzugsweise gemeinsam mit mindestens einer Partie des Gehäuses, in Zwei- oder Mehrkomponenten-Spritzgiesstechnik erstellt wird.

8. Verfahren nach einem der Ansprüche 1 bis 7, **dadurch gekennzeichnet, dass** auf der Aussenseite einer Gehäusepartie mindestens ein vorgegebener Flächenbereich gemeinsam mit der Gehäusepartie in Zwei- oder Mehrkomponenten-Spritzgiesstechnik erstellt wird, vorzugsweise als Designelement und/oder tastbarer Flächenbereich als Bedienungshilfe am Hörgerät.

9. Hörgerät aus mehreren Teilen assembliert, **dadurch gekennzeichnet, dass** mindestens zwei der Teile aus unterschiedlichen Materialien durch Zwei- oder Mehrkomponenten-Spritzgiesstechnik gemeinsam gefertigt sind.

10. Hörgerät nach Anspruch 9, **dadurch gekennzeichnet, dass** einer der Teile eine Partie des Hörgerätegehäuses ist.

11. Hörgerät nach einem der Ansprüche 9 oder 10, **dadurch gekennzeichnet, dass** einer der Teile eine Dichtung ist, und bevorzugterweise der zweite Teil mindestens eine Partie des Gehäuses.

12. Hörgerät nach einem der Ansprüche 9 bis 11, **dadurch gekennzeichnet, dass** der eine Teil ein akustischer Leiter ausgangsseitig eines elektrisch-mechanischen Wandlers des Hörgerätes ist.

13. Hörgerät nach einem der Ansprüche 9 bis 12, **dadurch gekennzeichnet, dass** einer der Teile ein akustischer Leiter eingangsseitig eines akustisch-elektrischen Wandlers des Hörgerätes ist.

14. Hörgerät nach einem der Ansprüche 9 bis 13, **dadurch gekennzeichnet, dass** im Gehäuse mindestens eine Aufnahmeform für einen weiteren Teil des Hörgerätes vorgesehen ist, vorzugsweise für einen elektrisch-mechanischen Wandler des Hörgerätes und, dass die Aufnahmeform mit mindestens einem weiteren Teil, vorzugsweise einer Partie des Gehäuses, in Zwei- oder Mehrkomponenten-Spritzgiesstechnik gemeinsam erstellt ist.

15. Hörgerät nach einem der Ansprüche 9 bis 14, **dadurch gekennzeichnet, dass** das Gehäuse eine Durchführungsöffnung für ein Bedienungsorgan, vorzugsweise ein Schaltorgan, aufweist, und die Öffnungsberandung einer der Teile ist, vorzugsweise mit dem Gehäuse und/oder dem Bedienungsorgan als zweiter der Teile.

16. Hörgerät nach einem der Ansprüche 9 bis 15, **dadurch gekennzeichnet, dass** an der Gehäuseaussenseite Flächenbereiche aus anderem Material als angrenzende Gehäusebereiche gefertigt sind, und gemeinsam mit letzteren in Zwei- oder Mehrkomponenten-Spritzgiesstechnik erstellt sind.

## Claims

1. Method of producing hearing devices in which at least two parts made of different materials are produced and assembled, **characterized in that** the parts are produced, already joined-together, by two-component or multi-component injection-moulding, said parts being produced from different material components.

2. Method according to Claim 1, **characterized in that**, as one of the parts, at least a portion of the housing is produced by two-component or multi-component injection-moulding.

3. Method according to either of Claims 1 and 2, **characterized in that**, as one of the parts, a seal is produced by two-component or multi-component injection-moulding, preferably at least a portion of the housing and a seal.

4. Method according to one of Claims 1 to 3, **characterized in that**, as one of the parts, an acoustic conductor at the output side of an electro-mechanical transducer of the hearing device is produced by two-component or multi-component injection-moulding.

5. Method according to one of Claims 1 to 4, **characterized in that**, as one of the parts, an acoustic conductor at the input side of an acoustic-electric transducer is produced by two-component or multi-component injection-moulding.

6. Method according to one of Claims 1 to 5, **characterized in that** a receiving seat for parts of the hearing device in the housing is produced, preferably together with at least a portion of the housing, by two-component or multi-component injection-moulding.

7. Method according to one of Claims 1 to 6, **characterized in that** a boundary portion of a through-opening in the housing is produced, preferably together with at least a portion of the housing, by two-component or multi-component injection-moulding.

8. Method according to one of Claims 1 to 7, **characterized in that**, on the outside of a housing portion, at least one predetermined surface area is produced, together with the housing portion, by two-component or multi-component injection-moulding, preferably as a design element and/or as a surface area which has a feel which helps in using the hearing device.

9. Hearing device assembled from a plurality of parts, **characterized in that** at least two of the parts, made of different materials, are produced together by two-component or multi-component injection-moulding.

10. Hearing device according to Claim 9, **characterized in that** one of the parts is a portion of the hearing device housing.

11. Hearing device according to either of Claims 9 and 10, **characterized in that** one of the parts is a seal, and the second part is preferably at least a portion of the housing.

12. Hearing device according to one of Claims 9 to 11, **characterized in that** one part is an acoustic conductor at the output side of an electro-mechanical transducer of the hearing device.

13. Hearing device according to one of Claims 9 to 12, **characterized in that** one of the parts is an acoustic conductor at the input side of an acoustic-electric transducer of the hearing device.

14. Hearing device according to one of Claims 9 to 13, **characterized in that** at least one receiving seat for a further part of the hearing device is provided in the housing, preferably for an electro-mechanical tranducer of the hearing device, and **in that** the receiving seat is produced together with at least one further part, preferably a portion of the housing, by two-component or multi-component injection-molding.

15. Hearing device according to one of Claims 9 to 14, **characterized in that** the housing has a through-opening for an operating member, preferably a switch member, and the border of the opening is one of the parts, preferably with the housing and/or the operating member as the second of the parts.

16. Hearing device according to one of Claims 9 to 15, **characterized in that** surface areas of different material than adjoining housing areas are formed on the outside of the housing, and are produced together with these by two-component or multi-component injection-molding.

## Revendications

1. Procédé de fabrication d'appareils auditifs, dans lequel au moins deux parties sont réalisées en des matériaux différents et sont assemblées, **caractérisé en ce qu'**on réalise les parties déjà réunies, par une technique de moulage par injection à deux ou plusieurs composants, où les parties sont réalisées en des composants de matériaux différents.

2. Procédé selon la revendication 1, **caractérisé en ce que**, comme l'une des parties, au moins une partie du boîtier est réalisée par une technique de moulage par injection à deux ou plusieurs composants.

3. Procédé selon l'une des revendications 1 ou 2, **caractérisé en ce que**, comme l'une des parties, un joint d'étanchéité est réalisé par une technique de moulage par injection à deux ou plusieurs composants, de préférence au moins une partie du boîtier et un joint d'étanchéité.

4. Procédé selon l'une des revendications 1 à 3, **caractérisé en ce que**, comme l'une des parties, un conducteur acoustique, au côté sortie d'un convertisseur électrique-mécanique de l'appareil auditif, est réalisé par une technique de moulage par injection à deux ou plusieurs composants.

5. Procédé selon l'une des revendications 1 à 4, **caractérisé en ce que**, comme l'une des parties, un conducteur acoustique est réalisé, au côté entrée d'un convertisseur acoustique électrique, en une technique de moulage par injection à deux ou plusieurs composants.

6. Procédé selon l'une des revendications 1 à 5, **caractérisé en ce qu'**un logement pour des parties de l'appareil auditif dans le boîtier, de préférence conjointement avec au moins une partie du boîtier, est réalisé selon une technique de moulage par injection à deux ou plusieurs composants.

7. Procédé selon l'une des revendications 1 à 6, **caractérisé en ce qu'**une partie de bord d'une ouverture de passage dans le boîtier, de préférence conjointement avec au moins une partie du boîtier, est réalisée selon une technique de moulage par injection à deux ou plusieurs composants.

8. Procédé selon l'une des revendications 1 à 7, **caractérisé en ce que** sur le côté extérieur d'une partie de boîtier, au moins une zone de face prédéfinie est réalisée conjointement avec la partie de boîtier selon une technique de moulage par injection à deux ou plusieurs composants, de préférence comme élément de design et/ou zone de face tâtable, comme aide de commande à l'appareil auditif.

9. Appareil auditif assemblé à partir de plusieurs parties, **caractérisé en ce qu'**au moins deux des parties sont fabriquées conjointement en des matériaux différents par une technique de moulage par injection à deux ou plusieurs composants.

10. Appareil auditif selon la revendication 9, **caractérisé en ce que** l'une des parties est une partie du boîtier de l'appareil auditif.

11. Appareil auditif selon l'une des revendications 9 ou 10, **caractérisé en ce que** l'une des parties est une garniture d'étanchéité, et de préférence la deuxième partie est au moins une partie du boîtier.

12. Appareil auditif selon l'une des revendications 9 à 11, **caractérisé en ce qu'**une partie est un conducteur acoustique au côté sortie d'un convertisseur électrique mécanique de l'appareil auditif.

13. Appareil auditif selon l'une des revendications 9 à 12, **caractérisé en ce que** l'une des parties est un conducteur acoustique au côté entrée d'un convertisseur acoustique-électrique de l'appareil auditif.

14. Appareil auditif selon l'une des revendications 9 à 13, **caractérisé en ce qu'**il est prévu dans le boîtier au moins une forme de réception pour une autre partie de l'appareil auditif, de préférence pour un convertisseur électrique-mécanique de l'appareil auditif, et **en ce que** la forme de réception est réalisée conjointement avec au moins une autre partie, de préférence une partie du boîtier, selon une technique de moulage par injection à deux ou plusieurs composants.

15. Appareil auditif selon l'une des revendications 9 à 14, **caractérisé en ce que** le boîtier présente une ouverture de passage d'un organe de commande, de préférence un organe de commutation, et **en ce que** le bord de l'ouverture est l'une des parties, de préférence avec le boîtier et/ou l'organe de commande comme deuxième des parties.

16. Appareil auditif selon l'une des revendications 9 à 15, **caractérisé en ce que** sont fabriquées au côté extérieur du boîtier des zones de face en un autre matériau que des zones de boîtier avoisinantes et sont fabriquées conjointement avec les dernières selon une technique de moulage par injection à deux ou plusieurs composants.
